# EUROPEAN PATENT SPECIFICATION

(11) **EP 3 329 987 B1**
(45) Date of publication and mention of the grant of the patent: **04.08.2021**
(21) Application number: 17208381.8
(22) Date of filing: 17.06.2013
(51) Int. Cl.: B01F 3/04, B01F 5/02, B01F 5/04, B01F 5/06, F01N 3/20, F01N 3/28, F01N 3/035

(54) **EXHAUST GAS MIXER**
ABGASMISCHER
MÉLANGEUR DE GAZ D'ÉCHAPPEMENT

(30) Priority: 15.06.2012 US 201261660532 P
(43) Date of publication of application: 06.06.2018
(62) Divisional of application: 13803723.9
(73) Proprietor: Cummins IP, Inc., Columbus, IN 47201 (US)
(72) Inventor: JOSHI, Vinay K., Vadgaon, Pune, 411014 (IN); SZAILER, Tamas, Clarkston, Michigan 48346 (US); KADAM, Dipesh M., Vadgaon, Pune, 411014 (IN); PALACIOS, Jose, Stoughton , Wisconsin 53589 (US); SPLINTER, Timothy V., Stoughton, Wisconsin 53589 (US); NANDE, Abhijeet, Columbus, Indiana 47201 (US); BRAULT, Joseph M., Columbus, Indiana 47201 (US)
(74) Representative: Hoffmann Eitle

(56) References cited:
- WO-A1-2008/023856
- DE-A1-102007 012 790
- JP-A- 2011 111 927
- US-A1- 2005 098 147
- US-A1- 2005 268 618

## Description

### FIELD

This invention relates to exhaust systems for internal combustion engines, and more particularly to a system for decomposing reductant and mixing together reductant and exhaust gas in a selective catalytic reduction (SCR) catalyst of an exhaust aftertreatment system.

### BACKGROUND

Exhaust aftertreatment systems receive and treat exhaust gas generated from an internal combustion engine. Typical exhaust aftertreatment systems include any of various components configured to reduce the level of harmful exhaust emissions present in the exhaust gas. For example, some exhaust aftertreatment systems for diesel powered internal combustion engines include various components, such as a diesel oxidation catalyst (DOC), particulate matter filter or diesel particulate filter (DPF), and a selective catalytic reduction (SCR) catalyst. In some exhaust aftertreatment systems, exhaust gas first passes through the diesel oxidation catalyst, then passes through the diesel particulate filter, and subsequently passes through the SCR catalyst.

Each of the DOC, DPF, and SCR catalyst components is configured to perform a particular exhaust emissions treatment operation on the exhaust gas passing through the components. Generally, the DOC reduces the amount of carbon monoxide and hydrocarbons present in the exhaust gas via oxidation techniques. The DPF filters harmful diesel particulate matter and soot present in the exhaust gas. Finally, the SCR catalyst reduces the amount of nitrogen oxides (NOₓ) present in the exhaust gas.

The SCR catalyst is configured to reduce NOₓ into less harmful emissions, such as N2 and H₂O, in the presence of ammonia (NH₃). Because ammonia is not a natural byproduct of the combustion process, it must be artificially introduced into the exhaust gas prior to the exhaust gas entering the SCR catalyst. Typically, ammonia is not directly injected into the exhaust gas due to safety considerations associated with the storage of liquid ammonia. Accordingly, conventional systems are designed to inject a urea-water solution into the exhaust gas, which is capable of decomposing into ammonia in the presence of the exhaust gas. SCR systems typically include a urea source and a urea injector or doser coupled to the source and positioned upstream of the SCR catalyst.

Generally, the decomposition of the urea-water solution into gaseous ammonia occupies three stages. First, urea evaporates or mixes with exhaust gas. Second, the temperature of the exhaust causes a phase change in the urea and decomposition of the urea into isocyanic acid (HNCO) and water. Third, the isocyanic acid reacts with water in a hydrolysis process under specific pressure and temperature concentrations to decompose into ammonia and carbon dioxide (CO₂). The ammonia is then introduced at the inlet face of the SCR catalyst, flows through the catalyst, and is consumed in the NOₓ reduction process. Any unconsumed ammonia exiting the SCR system can be reduced to N₂ and other less harmful or less noxious components using an ammonia oxidation catalyst.

To sufficiently decompose into ammonia, the injected urea must be given adequate time to complete the three stages. The time given to complete the three stages and decompose urea into ammonia before entering the SCR catalyst is conventionally termed residence time. Some prior art exhaust aftertreatment systems utilize a long tube of a fixed linear decomposition length that extends between the urea injector and SCR catalyst inlet face. The fixed linear decomposition length of prior art systems must be quite long in order to provide the necessary residence time. Long tubing for urea decomposition often takes up valuable space that could be occupied by other vehicle components and influences the design of the exhaust aftertreatment system. However, shorter decomposition tubes associated with some prior art end-in, end-out and end-in, side-out SCR systems may not provide a sufficiently long residence time to properly evaporate the injected urea.

Additionally, some prior art exhaust aftertreatment systems, particularly those systems that utilize or require in-line or end-to-end or end-to-side components, do not provide adequate mixing of the urea/ammonia with the exhaust gas. Inadequate mixing results in a low ammonia vapor uniformity index, which can lead to crystallization/polymerization buildup inside the SCR catalyst or other SCR system components, localized aggregation of ammonia, inadequate distribution of the ammonia across the SCR catalyst surface, lower NOₓ conversion efficiency, and other shortcomings.

Further, many exhaust aftertreatment systems with end-to-end or end-to-side SCR systems fail to adequately distribute exhaust gas across the inlet face of the SCR catalyst. An uneven distribution of exhaust gas at the SCR catalyst inlet can result in excessive ammonia slip and less than optimal NOₓ conversion efficiency. For example, a low exhaust flow distribution index at the SCR catalyst inlet results in a lower amount of SCR catalyst surface area in contact with the exhaust gases. The lesser the catalyst surface area in contact with the exhaust gases, the lower the NOₓ reduction efficiency of the SCR catalyst.

US 2005/098147 A1 discloses a gas-economizing powerful engine speed increaser. It discloses an exhaust gas mixer according to the preamble of claim 1.

### SUMMARY OF THE INVENTION

In a first aspect of the present invention, there is provided an exhaust gas mixer according to Claim 1.

In a second aspect of the present invention, there is provided an exhaust system according to Claim 4.

### BRIEF DESCRIPTION OF THE DRAWINGS

In order that the advantages of the subject matter may be more readily understood, a more particular description of the subject matter briefly described above will be rendered by reference to specific embodiments that are illustrated in the appended drawings. Understanding that these drawings depict only typical embodiments of the subject matter and are not therefore to be considered to be limiting of its scope, the subject matter will be described and explained with additional specificity and detail through the use of the drawings, in which:
Figure 1 is a perspective view of an exhaust aftertreatment system according to one embodiment shown with see-through housing to more clearly show internal components of the system;
Figure 2 is a perspective view of an exhaust mixer with a central channel according to one embodiment;
Figure 3 is a front view of the exhaust mixer of Figure 2;
Figure 4 is a partial cross-sectional side view of an exhaust mixer with a central channel according to one embodiment;
Figure 5 is a cross-sectional perspective view of a closed-end perforated tube and perforated flange plate of an exhaust aftertreatment system according to one embodiment; and
Figure 6 is a cross-sectional side view of the closed end or plug of a closed-end perforated tube according to one embodiment.

### DETAILED DESCRIPTION

The subject matter of the present application has been developed in response to the present state of the art, and in particular, in response to the problems and needs in the art that have not yet been fully solved by currently available exhaust aftertreatment systems employing an SCR system. Accordingly, the subject matter of the present application has been developed to provide a reductant decomposition and mixing system, and associated apparatus, that overcomes at least some of the following or other shortcomings of prior art reductant mixing and decomposition techniques and devices.

According to one embodiment, a selective catalytic reduction (SCR) system includes a mixer that has a plurality of blades spaced about a central tube. The mixer can be configured to receive a reductant and exhaust gas mixture. The SCR system also includes a closed-end tube that is downstream of the mixer and configured to receive the reductant and exhaust gas mixture from the mixer. The closed-end tube includes a closed end opposing an open end. The closed end is substantially perpendicular to an exhaust flow direction. The closed-end tube further includes a sidewall that extends between the open and closed end. The sidewall can include a plurality of perforations. The flange plate of the SCR system includes an annular disk that has a plurality of openings through which reductant and exhaust gas mixture received from the closed-end tube is flowable. The flange plate is coupled to and supports in place the closed-end tube.

In certain implementations, the SCR system is one of an in-line system, end-to-end system, or end-to-side system. The SCR system may further include a linear exhaust conduit that extends between a reductant doser and an inlet of an SCR catalyst. The mixer, closed-end tube, and flange plate can be positioned within the linear exhaust conduit between the reductant doser and the inlet of the SCR catalyst. The linear exhaust conduit may include a decomposition tube and an SCR catalyst housing. The mixer can be positioned within the decomposition tube. At least a portion of the closed-end tube can be positioned within the SCR catalyst housing, and the flange plate can be positioned within the SCR catalyst housing. The mixer can be a secondary mixer, and the SCR system can further include a primary mixer positioned within the linear exhaust conduit downstream of the reductant doser and upstream of the secondary mixer.

According to some implementations, the plurality of blades induces a vortical swirling exhaust gas flow pattern and the central tube induces a linear exhaust gas flow pattern within the exhaust gas vortical swirling flow pattern. The plurality of perforations of the closed-end tube can induce a radially outwardly directed exhaust gas flow pattern. The plurality of openings of the flange plate can induce a plurality of concentrated radially outer regions of exhaust gas. The SCR system can be configured such that an entirety of exhaust gas passing through the mixer is received by the closed-end tube and passes through the plurality of perforations of the closed-end tube. Further, the SCR system can be configured such that an entirety of exhaust gas passing through the plurality of perforations of the closed-end tube passes through the plurality of openings of the flange plate.

In another embodiment, an exhaust gas mixer includes an inner tube that defines a central conduit. The exhaust gas mixer may also include an outer tube that is positioned about the inner tube in coaxial alignment with the inner tube. Additionally, the exhaust gas mixer can include a plurality of blades that are coupled to and positioned between the inner and outer tubes. According to certain implementations, a radius of the inner tube is equal to or more than half a radius of the outer tube.

Each of the plurality of blades includes a radially inner edge fixed to the inner ring and a radially outer edge fixed to the outer ring. The radially inner edge and radially outer edge are non-parallel to a central axis of the inner tube. The radially inner edge defines a first angle relative to the central axis and the radially outer edge defines a second angle relative to the central axis. The first and second angles are different. The first angle is between about 30° and about 50°, and the second angle is between about 50° and about 70°. Each of the plurality of blades may include a leading edge and a trailing edge, where each of the plurality of blades is curved in a direction extending from the leading edge to the trailing edge.

In yet another embodiment, an exhaust tube for receiving an exhaust gas stream flowing in a flow direction includes an open upstream end that is configured to receive the exhaust gas stream flowing in the flow direction, and a closed downstream end that defines an exhaust impact surface that is substantially perpendicular to the flow direction. The exhaust impact surface redirects the exhaust gas stream in a redirected direction that is substantially perpendicular to the flow direction. The exhaust tube also includes a sidewall that extends between the open upstream and closed downstream ends. The sidewall includes a plurality of perforations through which the redirected exhaust gas is flowable.

According to some implementations of the exhaust tube, the exhaust impact surface is convex. In certain implementations, an entirety of the exhaust gas stream received by the exhaust tube flows through the plurality of perforations. According to yet certain implementations, the sidewall extends parallel to the flow direction, and the redirected exhaust gas flows through the plurality of perforations in the redirected direction.

Reference throughout this specification to features, advantages, or similar language does not imply that all of the features and advantages that may be realized with the present invention should be or are in any single embodiment or implementation of the invention. Rather, language referring to the features and advantages is understood to mean that a specific feature, advantage, or characteristic described in connection with an embodiment is included in at least one embodiment of the present invention. Discussion of the features and advantages, and similar language, throughout this specification may, but do not necessarily, refer to the same embodiment or implementation. In the following description, numerous specific details are provided to impart a thorough understanding of embodiments of the subject matter of the present disclosure. One skilled in the relevant art will recognize that the subject matter of the present disclosure may be practiced without one or more of the specific features, details, components, materials, and/or methods of a particular embodiment or implementation. In other instances, additional features and advantages may be recognized in certain embodiments and/or implementations that may not be present in all embodiments or implementations. Further, in some instances, well-known structures, materials, or operations are not shown or described in detail to avoid obscuring aspects of the subject matter of the present disclosure. The features and advantages of the subject matter of the present disclosure will become more fully apparent from the following description and appended claims, or may be learned by the practice of the subject matter as set forth hereinafter.

Reference throughout this specification to "one embodiment," "an embodiment," or similar language means that a particular feature, structure, or characteristic described in connection with the embodiment is included in at least one embodiment of the subject matter of the present disclosure. Appearances of the phrases "in one embodiment," "in an embodiment," and similar language throughout this specification may, but do not necessarily, all refer to the same embodiment. Similarly, the use of the term "implementation" means an implementation having a particular feature, structure, or characteristic described in connection with one or more embodiments of the subject matter of the present disclosure, however, absent an express correlation to indicate otherwise, an implementation may be associated with one or more embodiments.

Described herein are various embodiments of a reductant decomposition and mixing system for, among other things, enhancing the decomposition of a reductant, such as urea, to ammonia in an exhaust gas, improving the mixing of urea and ammonia with exhaust gas, and improving the exhaust flow distribution uniformity into the SCR catalyst. The reductant decomposition and mixing system forms part of an exhaust aftertreatment system that has an SCR catalyst and reductant injector. In one embodiment, the reductant decomposition and mixing system is specifically configured for use in an end-in, end-out (e.g., end-to-end), and/or end-in, side-out, exhaust aftertreatment system configuration, as opposed to a switch-back exhaust aftertreatment system configuration. The system can include a secondary mixer with a central channel, a closed-end perforated tube, and a perforated flange plate. The secondary mixer creates a cyclone effect and the central channel obstructs the formation of a low pressure zone between the swirling exhaust and reductant mixture. The closed-end perforated tube prevents the direct and forceful impact of exhaust and reductant mixture against the SCR catalyst face, and the perforations of the tube direct the mixture radially outwardly out of the tube. The flange plate supports the secondary mixer and tube, and includes a perforation pattern that increases the residence time, facilitates a radially outwardly distribution of the mixture, and further mixes the mixture prior to entering the SCR catalyst.

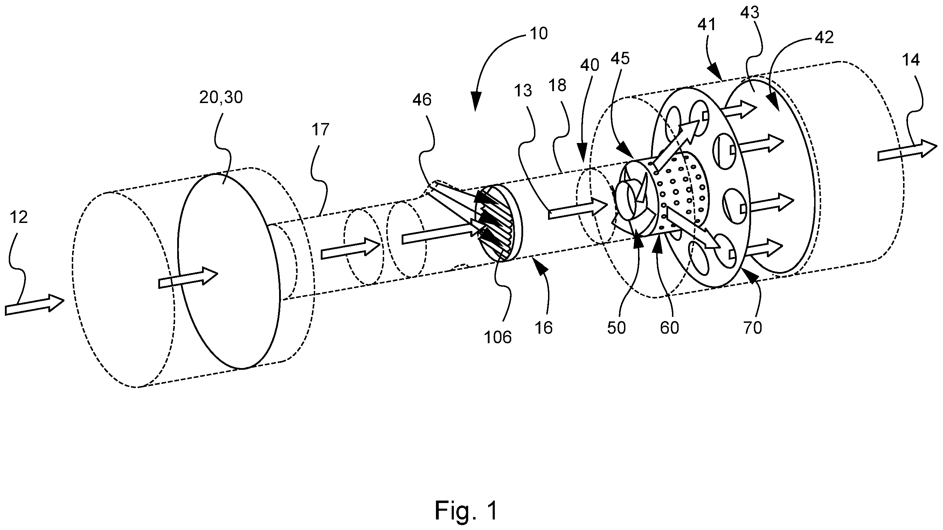

In one specific embodiment illustrated in Figure 1, an exhaust aftertreatment system 10 is coupled to an internal combustion engine (not shown). The exhaust aftertreatment system 10 is capable of receiving and treating exhaust gas generated by the engine as indicated by directional arrow 12. After being treated by the exhaust aftertreatment system 10, exhaust gas is expelled into the atmosphere via a tailpipe (not shown) as indicated by directional arrow 14. In certain implementations, the exhaust aftertreatment system 10 is secured to a vehicle in which the engine is housed.

The exhaust aftertreatment system 10 includes a plurality of exhaust treatment devices. For example, the exhaust aftertreatment system 10 has a housing that includes a diesel oxidation catalyst (DOC) 20 and a diesel particulate filter (DPF) 30 downstream of the DOC. The aftertreatment system 10 also includes a selective catalytic reduction (SCR) system 40 that has an SCR catalyst 42. The SCR catalyst 42 includes an open face 43 that is open to and receives incoming exhaust flow. The SCR system 40 also includes a reductant injector 46 coupled to a reductant supply source (not shown). The reductant injector 46 injects reductant from the supply source into a reductant decomposition tube 18 upstream of the SCR catalyst 42. The DPF 30 is fluidly coupled with the SCR catalyst 42 via an exhaust tube 16. Although the exhaust aftertreatment system 10 of Figure 1 shows one DOC 20, DPF 30, and SCR catalyst 42 in a specific order relative to each other, in other embodiments, an exhaust aftertreatment system can have fewer or more than the number of exhaust treatment devices shown in Figure 1 in a different order relative to each other without departing from the essence of the present disclosure.

The exhaust tube 16 includes a section 17 upstream of the injector 46 and a section 18 downstream of the injector. The downstream section 18 is defined as a reductant decomposition tube. The system 10 further includes a reductant decomposition and mixing system 45 positioned between the injector 46 and the open face 43 of the SCR catalyst 42. The system 45 can be positioned partially within and proximate an outlet end of the decomposition tube 18, and positioned at least partially within an SCR catalyst housing 41 that houses the SCR catalyst 42. The decomposition tube 18 and SCR catalyst housing 41 can define a linear exhaust conduit (e.g., be coaxially aligned) in certain implementations. Regardless of the position of the reductant decomposition and mixing system 45, exhaust gas and injected reductant pass through the system 45 before being presented at the SCR catalyst face 43 and entering the SCR catalyst 42. In certain implementations, the reductant is urea. The illustrated exhaust aftertreatment system 10 is an end-in, end-out (e.g., end-to-end) system. In other words, the central axis of each of the components of the system 10 (i.e., DOC 20, DPF 30, decomposition tube 18, and SCR catalyst 42) are coaxially aligned. However, in other embodiments, the reductant decomposition and mixing system of the present disclosure is operable with an exhaust aftertreatment system with an end-in, side-out type configuration. Additionally, even in some embodiments, the reductant decomposition and mixing system of the present disclosure can provide certain advantages when used an exhaust aftertreatment system with a switchback type configuration.

Despite the reductant decomposition and mixing system 45, in certain implementations, the SCR system 40 includes a first or initial mixer 106 positioned proximate an inlet end of the decomposition tube 18. The mixer 106 is configured to facilitate an initial mixing of injected reductant and exhaust gas flowing through the exhaust tube 16. In some implementations, the reductant injection and decomposition system 45 sufficiently mixes, decomposition, and distributes the reductant spray (e.g., urea) and exhaust gas that a dedicated first mixer 106 is not necessary. However, without the reductant decomposition and mixing system 45, the first mixer 106 does not sufficiently mix, promote decomposition, and promote wide distribution to achieve adequate NOₓ conversion efficiency within the SCR catalyst.

In the reductant decomposition tube 16, reductant injected by the injector 46 mixes with exhaust gas flowing from the upstream section 17 of the exhaust tube 16 and decomposes to gaseous ammonia prior to being introduced, with the exhaust gas, into the SCR catalyst 42. The gaseous ammonia reacts with NOₓ in the presence of the SCR catalyst 42 to reduce NOₓ in the exhaust gas to less harmful emissions. To facilitate reductant decomposition (e.g., urea to ammonia), mixing of reductant and exhaust gas, and more uniform distribution of reductant within the exhaust gas, the reductant decomposition and mixing system 45 includes at least one of a mixer 50, a closed-end perforated tube 60, and a perforated flange plate 70.

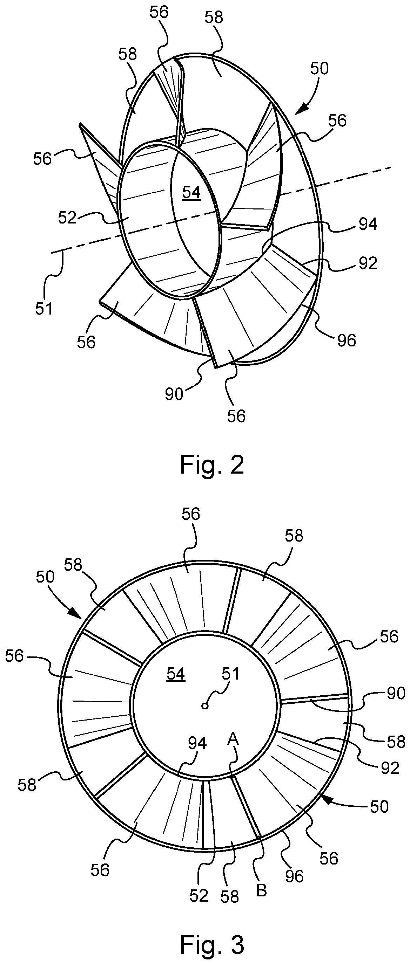

Referring to Figure 2, the mixer 50 includes a plurality of blades 56 configured to induce a vortical swirling of the exhaust and reductant mixture about a central axis 51 of the mixer. The mixer 50 also includes concentric inner and outer rings or tubes 52, 53. The inner ring 52 defines a fluid conduit 54 through which a portion of the reductant and exhaust mixture is flowable. The outer ring 53 is substantially removed from Figures 1 and 2 for convenience in showing the configuration of the blades 56. In some implementations, the outer ring 53 is configured similar to the inner ring 52, but with a larger inner diameter. In some implementations, a radius of the fluid conduit 54 defined by the inner ring 52 is about half, or more than half of, the radius of the outer ring 53. The blades 56 are coupled to and positioned between the inner and outer rings 52, 53. Each blade 56 includes a leading edge 90, trailing edge 92, radially inner edge 94, and radially outer edge 96. In the illustrated embodiment, the radially inner edges 94 of the blades 56 are fixed to the inner ring 52 and the radially outer edges 96 are fixed to the outer ring 53. However, in some embodiments, the outer ring 53 is omitted and the outer edges 96 of the blades 56 are fixed or coupled directly to an inner surface of the decomposition tube 18. The leading edges 90 are positioned upstream of the trailing edges 92 when installed in the SCR system 40 with the exhaust and reductant mixture flowing into the decomposition and mixing system 45 as indicated by directional arrow 13 (see Figure 1). The blades 56 define curved fluid conduits 58 between adjacent blades.

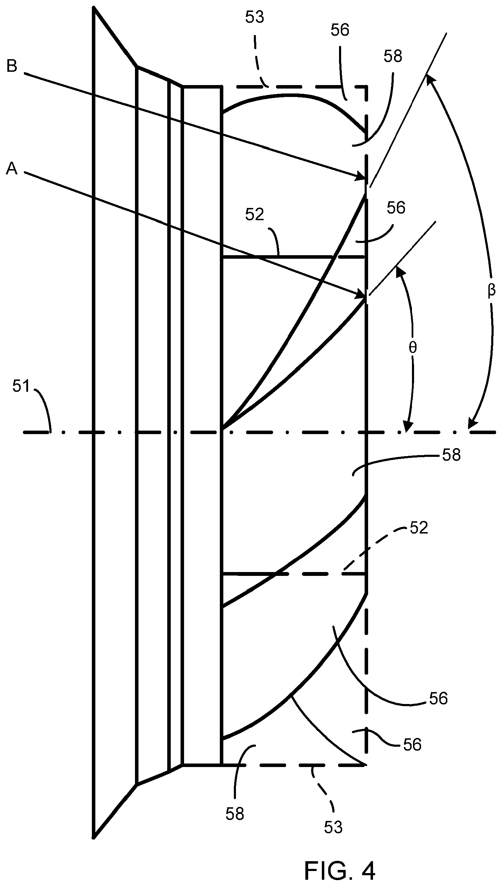

Generally, the blades 56 are curved in a direction from the leading edge 90 to the trailing edge 92, and curved in a direction from the inner edge 94 to the outer edge 96. The inner and outer edges 94 are substantially non-parallel to the central axis 51 of the mixer 50. For example, as shown in Figure 4, the inner and outer edges 94, 96 form respective angles (e.g., angles of incidence) θ, β with the central axis 51 at the respective junctions A, B with the leading edge 90.

The angle θ defined between the inner edge 94 and the central axis 51 at the junction A is between about 30° and about 50°. In one specific implementation, the angle θ is about 43°. The angle β defined between the outer edge 96 and the central axis 51 at the junction B is between about 50° and about 70°. In one specific implementation, the angle β is about 61°. The angles of incidence defined between the inner and outer edges 94, 96 and the central axis 51 at the junction with the trailing edge 92 are greater than the respective angles θ, β due to the blades 56 curving about an axis extending perpendicular to the central axis 51.

The swirling promotes mixing of the reductant and exhaust gas, as well as increases the residence time, which leads to increased reductant decomposition. More specifically, the vortical or swirling pattern of exhaust effectuated by the mixer 50 effectively increases the distance the exhaust must travel relative to linear flow through a conventional exhaust tube having the same axial length. Because the exhaust is forced to travel a longer distance, the residence time for decomposing the reductant into ammonia is increased. The vortical pattern induced by the mixer 50 also improves the mixing of the reductant and/or ammonia with the exhaust gas. However, vortical swirling patterns tend to create a low pressure zone about which the swirling reductant and exhaust gas mixture flows. Such low pressure zones produce a vacuum effect that radially inwardly draws the circulating or swirling mixture. In some applications, it may be desirable to force the exhaust gas and reductant mixture radially outwardly to improve the special distribution of the mixture across the SCR catalyst face 43. Accordingly, in such implementations, the presence of a low pressure zone to draw the mixture radially inwardly may be undesirable. Additionally, centralized low pressure zones induced by vertical swirling patterns can increase the backpressure within the exhaust system, which may lead to undesirable effects, such as reduced engine performance and fuel efficiency.

In addition to providing structural stability, the inner ring 52 and associated conduit 54 are designed to prevent or at least reduce the likelihood of the formation of centralized low pressure zones within the exhaust and reductant mixture. As the mixture flows through the mixer 50, a first portion of the mixture (e.g., at the radially outward regions of the mixture stream) engages the blades 56, which induces a swirling pattern in the first portion. A second portion of the mixture (e.g., at the radially inward regions of the mixture stream) flows through the conduit 54. The second portion of the mixture remains relatively unaffected by the blades 56 and thus maintains a substantially linear, or non-swirling, flow pattern. Accordingly, the mixer 50 manipulates a portion of the exhaust and reductant mixture to swirl around a relatively linearly directed flow at relatively high pressure. The relatively high pressure of the central flow coming out of the mixer 50 counters the tendency of the flow swirling about the central flow to form a low pressure zone. Accordingly, the swirling flow remains within a radially outward region of the mixture stream exiting the mixer, which increases the decomposition residence time and mixing while improving distribution uniformity of the mixture at the face 43 of the SCR catalyst 42, and the formation of low pressure zones is avoided, which helps reduce backpressure within the exhaust system 10.

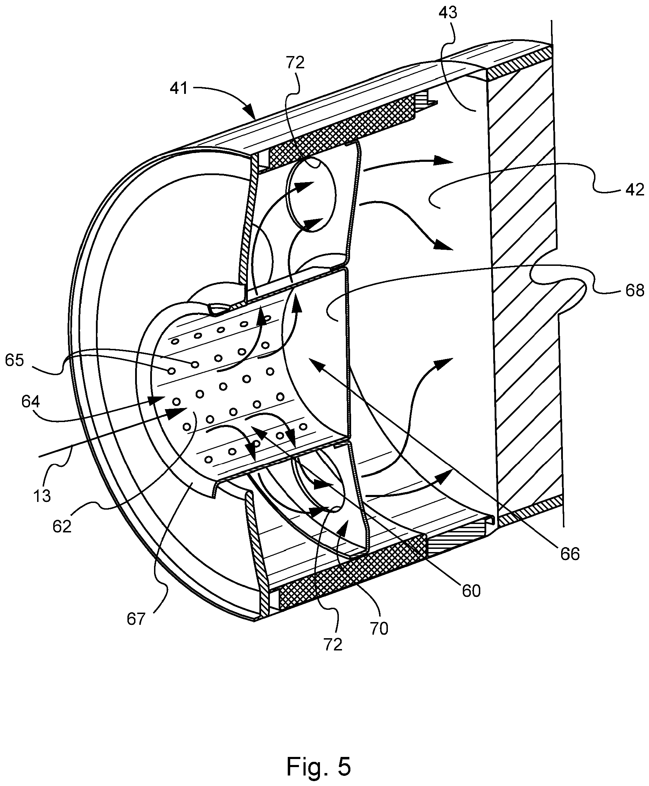

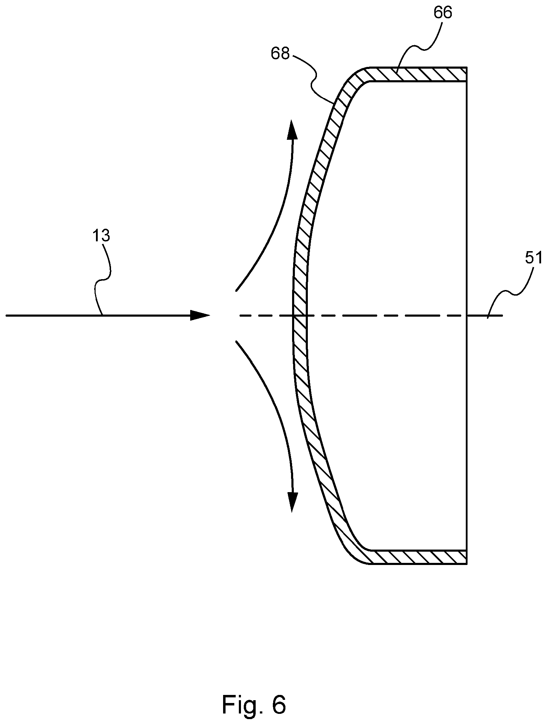

Enhanced decomposition, mixing, and distribution of the reductant and exhaust mixture can be facilitated through use of the closed-end perforated tube 60 positioned downstream of the mixer 50. As shown in Figures 1 and 5, the closed-end or plugged perforated tube 60 includes a sidewall 62 extending between an open upstream end 67 and a closed downstream end 66. The closed end 66 prevents the portion of the exhaust and reductant mixture flowing in the direction 13 from directly impacting the face 43 of the SCR catalyst 42. The closed end 66 includes an impact surface that is substantially perpendicular to the exhaust flow direction 13. Referring to Figure 6, the closed end 66 may be a plug or flange 66 that is seated and fixed to a downstream end of the tube 60. Generally, the plug 66 redirects the mixture flow 13 radially outward as shown in Figure 6. In this manner, not only is the relatively large concentration of the mixture about a central region dispersed or redistributed radially outwardly to improve the distribution uniformity of the mixture, but damage due to the momentum of the large concentration of the mixture moving in the axial direction 13 directly impacting the face 43 of the SCR catalyst 42 is reduced. To facilitate radially outward redirection of the mixture, the plug 66 may include a contoured end surface 68. As shown, the end surface 68 may be substantially convex.

Radially outward redirection of the reductant and exhaust mixture is further facilitated via a perforation pattern 64 formed in the sidewall 62 of the tube. The perforation pattern 64 includes a plurality of perforations or openings 65 arranged along the sidewall 62 in a desirable pattern. The perforations 65 are through-holes that allow the mixture entering the tube 60 to exit the tube and enter a cavity of the housing 41 in which the SCR catalyst 42 is housed. The perforation pattern 64 can include any number of perforations 65 having any of various shapes and sizes, and arranged in any of various patterns, as desired. For example, in the illustrated implementation, the perforation pattern 64 includes axially aligned rows of perforations 65 each having the same size.

In operation, reductant and exhaust mixture flows into the tube 60 as indicated by directional arrow 13. As indicated with directional arrows, the mixture is radially outwardly redirected by virtue of the closed end 66 of the tube 66. The radially outwardly directed flow passes through the perforations 65 of the perforation pattern 64 into a radially outward region of the cavity defined by the housing 41. The redirection of the mixture not only increases the residence time of the mixture, but also further mixes the mixture and distributes the mixture to the outer peripheries of the housing away from a centralized region, which improves the distribution uniformity of the mixture.

Again referring to Figures 1 and 5, the perforated flange plate 70 couples a portion of the plugged or perforated tube 60 to the sidewalls of the housing 41. Accordingly, the perforated flange plate 70 acts to assist in holding the tube 60 in place during use. The flange plate 70 is a generally annular disk with a plurality of openings 72 spaced about the disk. A radially outer periphery of the plate 70 is fixed to a wall of the housing 41, and a radially inner periphery of the plate is fixed to the tube 60 (e.g., the closed end 66 of the tube). The plurality of openings 72, which can be any number of variously sized, shaped, and positioned openings, are positioned between the inner and outer peripheries. Generally, the openings 72 are larger than the openings 65 formed in the tube 60. The openings 72 act to at least partially concentrate respective portions of the mixture exiting the tube 60 into radially outer regions of the housing 41. In this manner, the residence time, mixing, and distribution of the mixture is further enhanced. After passing through the openings 72 in the flange plate 70, the mixture is allowed to expand and migrate radially inwardly such that a high distribution uniformity of the mixture is achieved at the face 43 of the SCR catalyst 42.

In the illustrated embodiments, the SCR system 40 includes the mixer 50, tube 60, and flange plate 70. However, in some embodiments, the SCR system includes fewer than all three of the mixer 50, tube 60, and flange plate 70. For example, in one embodiment, the SCR system may include only the mixer 50, without the tube 60 and flange plate 70. In yet another embodiment, the SCR system may include the tube 60, without the mixer 50, and with or without the flange plate 70.

According to some embodiments, the mixer 50, which can be a secondary mixer as described above, tube 60, and flange plate 70 are manufactured or formed separately from the decomposition tube 16 and SCR housing 41. The mixer 50 can be relatively easily coupled to the inside of the decomposition tube 16 via a coupling technique, such as welding. Similarly, the flange plate 70 can be coupled to the interior of the SCR housing 41 upstream of the SCR catalyst 42 via a coupling technique, such as welding. As shown in Figure 1, in certain embodiments, an entirety of the exhaust gas flowing through the decomposition tube 16 (and, for example, the DOC 20 and DPF 30) passes through the mixer 50, the tube 60, and the flange plate 70.

In the above description, certain terms may be used such as "up," "down," "upper," "lower," "horizontal," "vertical," "left," "right," and the like. These terms are used, where applicable, to provide some clarity of description when dealing with relative relationships. But, these terms are not intended to imply absolute relationships, positions, and/or orientations. For example, with respect to an object, an "upper" surface can become a "lower" surface simply by turning the object over. Nevertheless, it is still the same object. Further, the terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. Further, the term "plurality" can be defined as "at least two."

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other, but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

The subject matter of the present disclosure may be embodied in other specific forms without departing from its essential characteristics. The described embodiments are to be considered in all respects only as illustrative and not restrictive. The scope of the invention is, therefore, indicated by the appended claims rather than by the foregoing description.

## Claims

1. An exhaust gas mixer, comprising:
an inner tube (52) defining a central conduit;
an outer tube (53) positioned about the inner tube (52) in coaxial alignment with the inner tube (52); and
a plurality of blades (56) coupled to and positioned between the inner and outer tubes (52, 53),
wherein each of the plurality of blades (56) comprises a radially inner edge (94) fixed to the inner tube (52) and a radially outer edge (96) fixed to the outer tube (53), the radially inner edge (94) and the radially outer edge (96) being non-parallel to a central axis (51) of the inner tube (52), the radially inner edge (94) defining a first angle (θ) relative to the central axis (51) at a junction (A) with a leading edge (90) of each of the plurality of blades (56), and the radially outer edge (96) defining a second angle (β) relative to the central axis (51) at a junction (B) with the leading edge (90) of each of the plurality of blades (56), wherein the first angle (Θ) and the second angle (β) are different, **characterized in that** the first angle (θ) is between 30° and 50°, and the second angle (β) is between 50° and 70°.

2. The exhaust gas mixer of claim 1, wherein a radius of the inner tube (52) is equal to or more than half a radius of the outer tube (53).

3. The exhaust gas mixer of claim 1, wherein each of the plurality of blades (56) is curved in a direction extending from the leading edge (90) to a trailing edge (92) of the blade (56).

4. An exhaust system for receiving an exhaust gas stream flowing in a flow direction, comprising:
the exhaust gas mixer of claim 1; and
an exhaust tube (60) positioned downstream of the exhaust gas mixer comprising:
an open upstream end (67) configured to receive the exhaust gas stream flowing in the flow direction;
a closed downstream end (66) defining an exhaust impact surface (68) substantially perpendicular to flow direction, the exhaust impact surface (68) redirecting the exhaust gas stream in a redirected direction substantially perpendicular to the flow direction; and
a sidewall (62) extending between the open upstream (67) and closed downstream end (66), the sidewall (62) comprising a plurality of perforations (65) through which the redirected exhaust gas is flowable.

5. The exhaust system of claim 4, wherein the exhaust impact surface (68) is convex.

6. The exhaust system of claim 4, wherein an entirety of the exhaust gas stream received by the exhaust tube (60) flows through the plurality of perforations (65).

7. The exhaust system of claim 4, wherein the sidewall (62) extends parallel to the flow direction, and wherein the redirected exhaust gas flows through the plurality of perforations (65) in the redirected direction.

## Patentansprüche

1. Abgasmischer, umfassend:
ein Innenrohr (52), das eine zentrale Leitung definiert;
ein Außenrohr (53), das um das innere Rohr (52) herum in koaxialer Ausrichtung mit dem Innenrohr (52) positioniert ist; und
eine Vielzahl von Schaufeln (56), die mit dem Innen- und dem Außenrohr (52, 53) gekoppelt und zwischen diesen positioniert sind,
wobei jede der Vielzahl von Schaufeln (56) eine radial innenliegende Kante (94), die am Innenrohr (52) befestigt ist, und eine radial außenliegende Kante (96), die am Außenrohr (53) befestigt ist, umfasst, wobei die radial innenliegende Kante (94) und die radial außenliegende Kante (96) nicht parallel zu einer zentralen Achse (51) des Innenrohrs (52) sind, wobei die radial innenliegende Kante (94) einen ersten Winkel (θ) bezüglich der zentralen Achse (51) an einer Verbindungsstelle (A) mit einer Vorderkante (90) jeder der Vielzahl von Schaufeln (56) definiert, und die radial außenliegende Kante (96) einen zweiten Winkel (β) bezüglich der zentralen Achse (51) an einer Verbindungsstelle (B) mit der Vorderkante (90) jeder der Vielzahl von Schaufeln (56) definiert, wobei sich der erste Winkel (θ) und der zweite Winkel (β) unterscheiden, **dadurch gekennzeichnet, dass** der erste Winkel (θ) zwischen 30° und 50° beträgt und der zweite Winkel (β) zwischen 50° und 70° beträgt.

2. Abgasmischer nach Anspruch 1, wobei ein Radius des Innenrohrs (52) gleich oder mehr als die Hälfte eines Radius des Außenrohrs (53) ist.

3. Abgasmischer nach Anspruch 1, wobei jede der Vielzahl von Schaufeln (56) in einer Richtung gekrümmt ist, die sich von der Vorderkante (90) zu einer Hinterkante (92) der Schaufel (56) erstreckt.

4. Abgasmischer zum Empfangen eines Abgasstroms, der in eine Strömungsrichtung strömt, umfassend:
den Abgasmischer nach Anspruch 1; und
ein Abgasrohr (60), das stromabwärts des Abgasmischers positioniert ist, umfassend:
ein offenes stromaufwärtiges Ende (67), das konfiguriert ist, einen Abgasstrom zu empfangen, der in die Strömungsrichtung strömt;
ein geschlossenes stromabwärtiges Ende (66), das eine Abgasaufprallfläche (68) im Wesentlichen senkrecht zur Strömungsrichtung definiert, wobei die Abgasaufprallfläche (68) den Abgasstrom in eine umgeleitete Richtung im Wesentlichen senkrecht zur Strömungsrichtung umleitet; und
eine Seitenwand (62), die sich zwischen dem offenen stromaufwärtigen (67) und dem geschlossenen stromabwärtigen Ende (66) erstreckt, wobei die Seitenwand (62) eine Vielzahl von Durchbrechungen (65) umfasst, durch die das umgeleitete Abgas strömen kann.

5. Abgassystem nach Anspruch 4, wobei die Abgasaufprallfläche (68) konvex ist.

6. Abgassystem nach Anspruch 4, wobei eine Gesamtheit des Abgasstroms, der von dem Abgasrohr (60) empfangen wird, durch die Vielzahl von Durchbrechungen (65) strömt.

7. Abgassystem nach Anspruch 4, wobei sich die Seitenwand (62) parallel zur Strömungsrichtung erstreckt und wobei das umgeleitete Abgas durch die Vielzahl von Durchbrechungen (65) in die umgeleitete Richtung strömt.

## Revendications

1. Mélangeur de gaz d'échappement, comprenant :
un tube intérieur (52) définissant une conduite centrale ;
un tube extérieur (53) positionné autour du tube intérieur (52) en alignement coaxial avec le tube intérieur (52) ; et
une pluralité de lames (56) couplées à et positionnées entre les tubes intérieur et extérieur (52, 53),
dans lequel chacune parmi la pluralité de lames (56) comprend un bord radialement intérieur (94) fixé au tube intérieur (52) et un bord radialement extérieur (96) fixé au tube extérieur (53), le bord radialement intérieur (94) et le bord radialement extérieur (96) n'étant pas parallèles à un axe central (51) du tube intérieur (52), le bord radialement intérieur (94) définissant un premier angle (θ) par rapport à l'axe central (51) au niveau d'une jonction (A) avec un bord d'attaque (90) de chacune parmi la pluralité de lames (56), et le bord radialement extérieur (96) définissant un second angle (β) par rapport à l'axe central (51) au niveau d'une jonction (B) avec le bord d'attaque (90) de chacune parmi la pluralité de lames (56), dans lequel le premier angle (θ) et le second angle (β) sont différents, **caractérisé en ce que** le premier angle (θ) est compris entre 30° et 50°, et le second angle (β) est compris entre 50° et 70°.

2. Mélangeur de gaz d'échappement selon la revendication 1, dans lequel un rayon du tube intérieur (52) est supérieur ou égal à la moitié d'un rayon du tube extérieur (53).

3. Mélangeur de gaz d'échappement selon la revendication 1, dans lequel chacune parmi la pluralité de lames (56) est incurvée dans une direction s'étendant du bord d'attaque (90) à un bord de fuite (92) de la lame (56).

4. Système d'échappement pour recevoir un flux de gaz d'échappement s'écoulant dans une direction d'écoulement, comprenant :
le mélangeur de gaz d'échappement selon la revendication 1 ; et
un tube d'échappement (60) positionné en aval du mélangeur de gaz d'échappement comprenant :
une extrémité en amont ouverte (67) configurée pour recevoir le flux de gaz d'échappement s'écoulant dans la direction d'écoulement ;
une extrémité en aval fermée (66) définissant une surface d'impact d'échappement (68) sensiblement perpendiculaire à la direction d'écoulement, la surface d'impact d'échappement (68) réorientant le flux de gaz d'échappement dans une direction de réorientation sensiblement perpendiculaire à la direction d'écoulement ; et
une paroi latérale (62) s'étendant entre l'extrémité en amont ouverte (67) et l'extrémité en aval fermée (66), la paroi latérale (62) comprenant une pluralité de perforations (65) à travers lesquelles le gaz d'échappement réorienté peut s'écouler.

5. Système d'échappement selon la revendication 4, dans lequel la surface d'impact d'échappement (68) est convexe.

6. Système d'échappement selon la revendication 4, dans lequel la totalité du flux de gaz d'échappement reçue par le tube d'échappement (60) s'écoule à travers la pluralité de perforations (65).

7. Système d'échappement selon la revendication 4, dans lequel la paroi latérale (62) s'étend parallèlement à la direction d'écoulement, et dans lequel le gaz d'échappement réorienté s'écoule à travers la pluralité de perforations (65) dans la direction de réorientation.
